# EUROPEAN PATENT APPLICATION

(11) **EP 4 822 858 A1**
(43) Date of publication of application: **14.10.2026**
(21) Application number: 24899140.8
(22) Date of filing: 15.05.2024
(51) Int. Cl.: H01M 50/30, H01M 50/367, H01M 50/20

(54) **BATTERY AND BATTERY PACK**

(30) Priority: 07.12.2023 CN 202311670354
(71) Applicant: SVOLT Energy Technology Co., Ltd., Changzhou, Jiangsu 213200 (CN)
(72) Inventor: ZHANG, Shuang, hangzhou, Jiangsu 213200 (CN); LIU, Changhui, hangzhou, Jiangsu 213200 (CN); YUAN, Yuan, hangzhou, Jiangsu 213200 (CN); SU, Shufa, hangzhou, Jiangsu 213200 (CN); ZHOU, Jie, hangzhou, Jiangsu 213200 (CN)
(74) Representative: Michalski Hüttermann & Partner mbB
(86) International application number: PCT/CN2024/093469
(87) International publication number: WO 2025/118488

(57) **Abstract**

The present application relates to the technical field of batteries. Disclosed are a battery and a battery pack. The battery comprises a housing, a pressure relief mechanism and an electrode assembly, wherein the pressure relief mechanism is disposed on the housing, the theoretical design value of the area of an opening region of the pressure relief mechanism is S₁, and the actual value of the area of the opening region of the pressure relief mechanism is Sᵥₐₗᵥₑ; and/or, the electrode assembly is disposed in the housing, and the electrode assembly and the inner wall of the housing are spaced apart from each other to form a pressure relief channel, the theoretical design value of the equivalent sectional area of the pressure relief channel being S₂, and the actual value of the equivalent sectional area of the pressure relief channel being S_{section}; when the Sᵥₐₗᵥₑ is determined, the number of pressure relief mechanisms is n₁, and then n₁=[S₁/Sᵥₐₗᵥₑ]; and/or, when S_{section} is determined, the number of pressure relief mechanisms is n₂, and then n₂=[S₂/S_{section}]. The present application rationalizes the arrangement of pressure relief mechanisms on a housing, which ensures that a hot gas can be smoothly discharged from the pressure relief mechanisms when a battery undergoes thermal runaway, thereby suppressing the burst of the housing, and thus improving the safety performance of the battery.

## Description

### CROSS-REFERENCE TO RELATED APPLICATION

The present disclosure claims priority to Chinese Patent Application No. 202311670354.2, filed with the China National Intellectual Property Administration on December 7, 2023 and entitled "BATTERY AND BATTERY PACK", which is incorporated herein by reference in its entirety.

### TECHNICAL FIELD

The present disclosure relates to the technical field of batteries, and specifically, to a battery and a battery pack.

### BACKGROUND ART

A battery, as a high-energy structural body, inevitably undergoes thermal runaway. The thermal runaway of the battery is a process of energy and material release, where the material release primarily includes gas release.

In the prior art, a pressure relief mechanism is provided on a housing of the battery to discharge hot gas generated when the battery undergoes thermal runaway. The hot gas flows toward the pressure relief mechanism through a pressure relief channel between an electrode assembly in the housing and an inner wall of the housing. The quantity of pressure relief mechanisms affects the safety of the battery housing. The improper setting of the quantity of pressure relief mechanisms may result in ineffective discharge of the hot gas through the pressure relief mechanisms, thereby causing safety issues such as housing rupture and explosion induced by vigorous gas generation during battery thermal runaway.

### SUMMARY

In view of the foregoing, the present disclosure provides a battery and a battery pack to solve the problem in the prior art in which improper setting of the quantity of pressure relief mechanisms on a conventional battery, which leads to ineffective discharge of hot gas through the pressure relief mechanisms, thereby easily causing housing rupture.

In a first aspect, the present disclosure provides a battery, which includes:
a housing;
a pressure relief mechanism disposed on the housing, where a theoretical design value of an opening region area of the pressure relief mechanism is S₁, and an actual value of the opening region area of the pressure relief mechanism is Sᵥₐₗᵥₑ; and/or
an electrode assembly disposed within the housing, where the electrode assembly is arranged at intervals from an inner wall of the housing to form a pressure relief channel, a theoretical design value of an equivalent sectional area of the pressure relief channel is S₂, and an actual value of the equivalent sectional area of the pressure relief channel is S_{section}, wherein
when Sᵥₐₗᵥₑ is determined, a quantity of pressure relief mechanisms is n₁, n₁=[S₁/Sᵥₐₗᵥₑ], and $\left⌈x\right⌉$ is a rounding-up operation; and/or
when S_{section} is determined, a quantity of pressure relief mechanisms is n₂, and n₂=[S₂/S_{section}].

Beneficial effects are as follows. When Sᵥₐₗᵥₑ is determined, for example, when the pressure relief mechanism is a standard component or when a specific pressure relief mechanism is requested by a customer, Sᵥₐₗᵥₑ is a fixed value, and n₁ pressure relief mechanisms required on the housing can be calculated by n₁=[S₁/Sᵥₐₗᵥₑ]. When S_{section} is determined, for example, when the external dimensions of the housing or the dimensions of the electrode assembly cannot be changed in certain projects, or when customer customization imposes requirements on the volume, energy, or density of the battery, S_{section} is a fixed value, and n₂ pressure relief mechanisms required on the housing can be calculated by n₂=[S₂/S_{section}]. The quantity of pressure relief mechanisms of the battery is associated with the opening region area of the pressure relief mechanisms and the equivalent sectional area of the pressure relief channel, and the quantity of pressure relief mechanisms required on the housing under different conditions is calculated through the above formulas. This avoids insufficient quantity of pressure relief mechanisms affecting gas discharge or excessive quantity increasing cost, thereby standardizing determination of the quantity of pressure relief mechanisms, and reasonably providing the pressure relief mechanisms on the housing, which ensures that hot gas can be smoothly discharged through the pressure relief mechanisms when the battery undergoes thermal runaway, thereby avoiding the rupture of the housing, and thus improving the safety performance of the battery.

In an optional embodiment, when both Sᵥₐₗᵥₑ and S_{section} are determined, the quantity of pressure relief mechanisms is n₃, and then n₃=n₁*n₂.

Beneficial effects are as follows. The quantity n₃ of pressure relief mechanisms required on the housing can be calculated by n₃=n₁*n₂ to meet the requirements of pressure relief mechanisms to be provided on the housing under different conditions, thereby standardizing and rationalizing the arrangement of the pressure relief mechanisms on the housing. The suitable quantity of pressure relief mechanisms can be ultimately determined based on different battery material systems, capacities, rated voltages, and gas generation characteristics including gas amount and gas generation rate, in combination with design values such as the areas of the pressure relief mechanisms and the equivalent sectional area of the pressure relief channel.

In an optional embodiment, the battery has a capacity C and a rated voltage V, and an area coefficient of the pressure relief mechanism is α, where 0.3≤α≤1, and S₁=CVα.

Beneficial effects are as follows. The theoretical design value S₁ of the opening region area of the pressure relief mechanism can be calculated according to S₁=CVα.

In an optional embodiment, an equivalent area coefficient of the pressure relief channel is γ, where 0.1≤γ≤0.5, and S₂=S₁*γ.

Beneficial effects are as follows. The theoretical design value S₂ of the equivalent sectional area of the pressure relief channel can be calculated by S₂=S₁*γ.

In an optional embodiment, an inner cavity of the housing has a length L, a height H, and a thickness T; and
a gas space occupancy rate of the battery is β, where 0.01≤β≤0.18, and S_{section}=LHTβ/(L+H)/2.

Beneficial effects are as follows. S_{section} can be calculated by S_{section}=LHTβ/(L+H)/2.

In an optional embodiment, the electrode assembly has a length l and a height h, and β=1-hl/(HL).

Beneficial effects are as follows. When no input parameter for the gas space occupancy rate β is available, the value of β can be determined according to β=1-hl/(HL).

In an optional embodiment, a plurality of pressure relief mechanisms are arranged at intervals on a side wall of the housing.

Beneficial effects are as follows. By providing the plurality of pressure relief mechanisms on the side wall of the housing at intervals, when a portion of the pressure relief channel is blocked or gas discharge is obstructed, gas can be discharged through other pressure relief mechanisms, which ensures that hot gas can be smoothly discharged through the pressure relief mechanisms during battery thermal runaway.

In an optional embodiment, the plurality of pressure relief mechanisms are symmetrically arranged.

Beneficial effects are as follows. By arranging the pressure relief mechanisms symmetrically, when a pressure relief channel on one side or a portion of the pressure relief mechanisms is blocked, gas in the pressure relief channel can be discharged through a symmetrical pressure relief channel or pressure relief mechanism, which ensures smooth gas discharge.

In an optional embodiment, an extension direction of the electrode assembly is perpendicular to a plane where the pressure relief mechanism is located.

Beneficial effects are as follows. During battery thermal runaway, hot gas can flow along the extension direction of the electrode assembly to the pressure relief mechanism, thereby reducing the tortuosity of the pressure relief path and rapidly and effectively discharging hot gas from the housing during battery thermal runaway, reducing the risk of battery explosion.

In a second aspect, the present disclosure further provides a battery pack, which includes the battery.

Beneficial effects are as follows. The quantity of pressure relief mechanisms in the battery pack is associated with the opening region area of the pressure relief mechanisms and the equivalent sectional area of the pressure relief channel, and the quantity of pressure relief mechanisms required on the housing under different conditions is calculated. This avoids insufficient quantity of pressure relief mechanisms affecting gas discharge or excessive quantity increasing cost, thereby standardizing determination of the quantity of pressure relief mechanisms, and reasonably providing the pressure relief mechanisms on the housing, which ensures that hot gas can be smoothly discharged through the pressure relief mechanisms when the battery undergoes thermal runaway, thereby avoiding the rupture of the housing, and thus improving the safety performance of the battery.

### BRIEF DESCRIPTION OF DRAWINGS

To describe the technical solutions in specific implementations of the present disclosure or in the prior art more clearly, the following briefly describes the drawings for describing specific implementations or the prior art. It is clear that the drawings in the following descriptions show merely some embodiments of the present disclosure, and those of ordinary skill in the art can still derive other drawings from these drawings without inventive efforts.
FIG. 1 is a sectional view of a battery according to an embodiment of the present disclosure at another angle;
FIG. 2 is a sectional view of a battery according to an embodiment of the present disclosure at another angle;
FIG. 3 is a schematic diagram illustrating one installation manner of a pressure relief mechanism in a battery according to an embodiment of the present disclosure;
FIG. 4 is a schematic diagram illustrating another installation manner of a pressure relief mechanism in a battery according to an embodiment of the present disclosure;
FIG. 5 is a schematic diagram illustrating yet another installation manner of a pressure relief mechanism in a battery according to an embodiment of the present disclosure;
FIG. 6 is a schematic diagram illustrating another installation manner of a pressure relief mechanism in a battery according to an embodiment of the present disclosure;
FIG. 7 is a schematic diagram illustrating another installation manner of a pressure relief mechanism in a battery according to an embodiment of the present disclosure;
FIG. 8 is a schematic diagram illustrating another installation manner of a pressure relief mechanism in a battery according to an embodiment of the present disclosure;
FIG. 9 is a schematic diagram illustrating another installation manner of a pressure relief mechanism in a battery according to an embodiment of the present disclosure;
FIG. 10 is a schematic diagram illustrating another installation manner of a pressure relief mechanism in a battery according to an embodiment of the present disclosure;
FIG. 11 is a schematic diagram illustrating another installation manner of a pressure relief mechanism in a battery according to an embodiment of the present disclosure;
FIG. 12 is a schematic diagram illustrating another installation manner of a pressure relief mechanism in a battery according to an embodiment of the present disclosure;
FIG. 13 is a schematic diagram illustrating another installation manner of a pressure relief mechanism in a battery according to an embodiment of the present disclosure; and
FIG. 14 is a schematic diagram illustrating another installation manner of a pressure relief mechanism in a battery according to an embodiment of the present disclosure.

### Reference numerals:

1. housing; 2. pressure relief mechanism; 3. electrode assembly; 301. electrode tab; and 4. pressure relief channel.

### DETAILED DESCRIPTION OF EMBODIMENTS

To make the objectives, technical solutions, and advantages of embodiments of the present disclosure clearer, the following clearly and completely describes the technical solutions in embodiments of the present disclosure with reference to the drawings in embodiments of the present disclosure. It is clear that the described embodiments are merely some rather than all of embodiments of the present disclosure. All other embodiments obtained by a person skilled in the art based on the embodiments of the present disclosure without inventive efforts shall fall within the protection scope of the present disclosure.

In the related art, a pressure relief mechanism is provided on a battery housing to discharge hot gas generated during battery thermal runaway. The hot gas flows toward the pressure relief mechanism through a pressure relief channel between an electrode assembly of the housing and an inner wall of the housing. The quantity of pressure relief mechanisms affects the safety of the battery housing. The improper setting of the quantity of pressure relief mechanisms can result in ineffective discharge of the hot gas through the pressure relief mechanisms, thereby causing safety issues such as housing rupture and explosion induced by vigorous gas generation during battery thermal runaway.

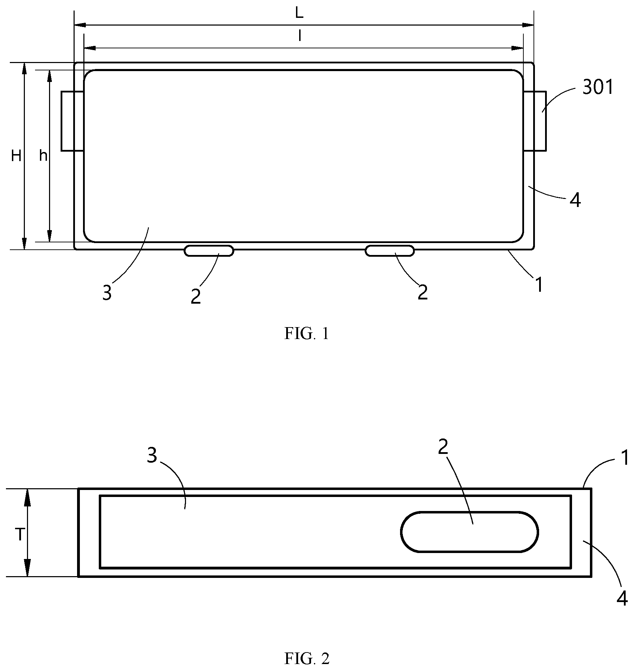

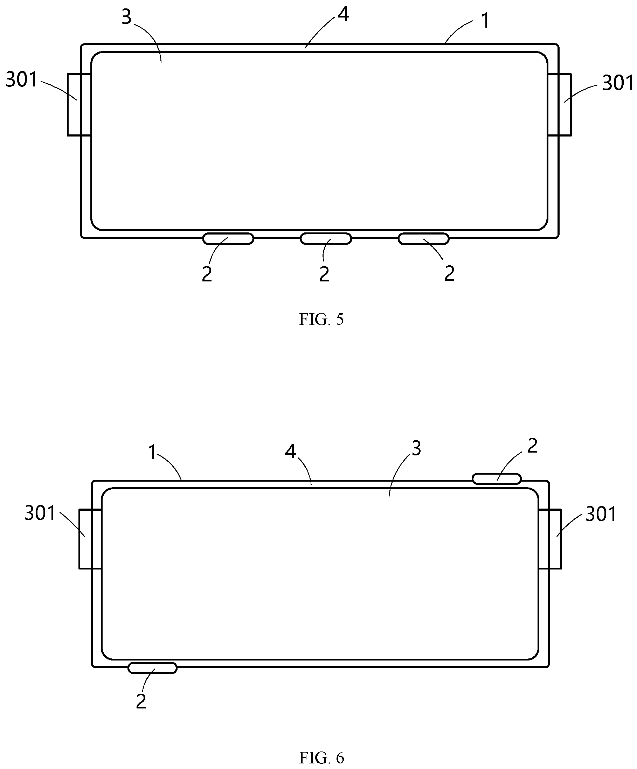

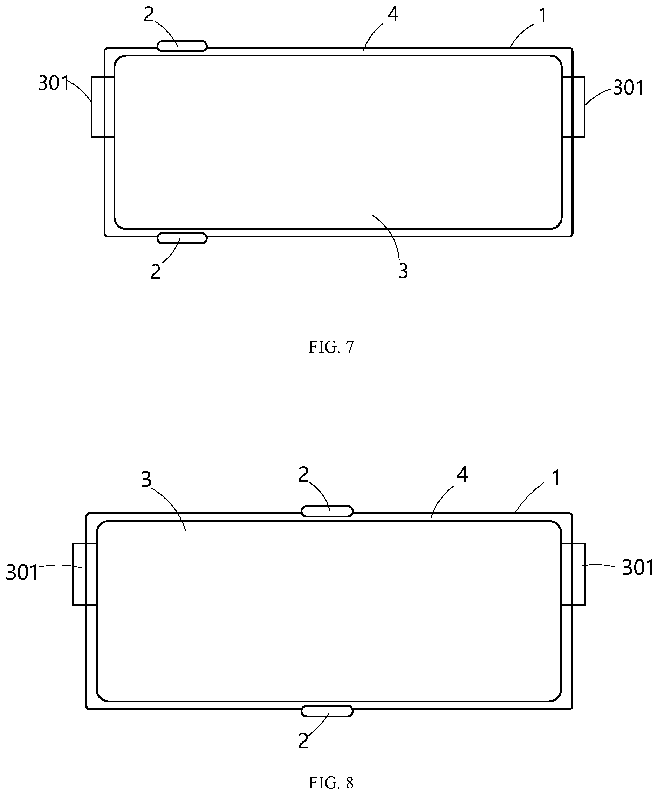

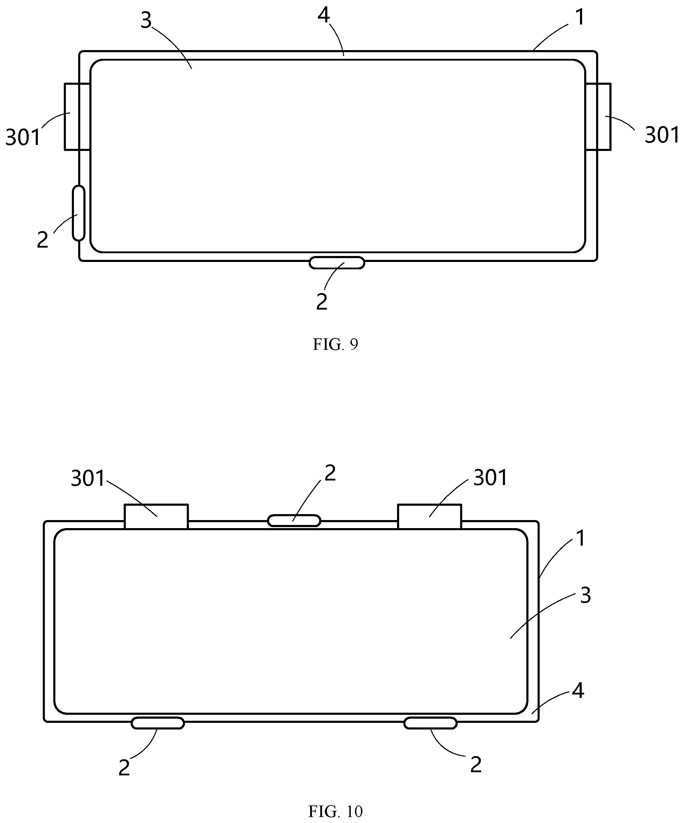

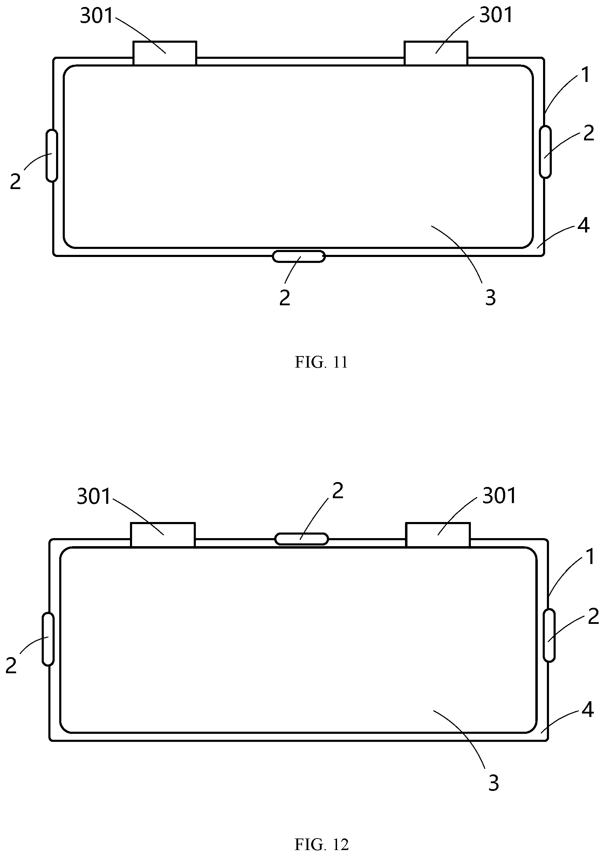

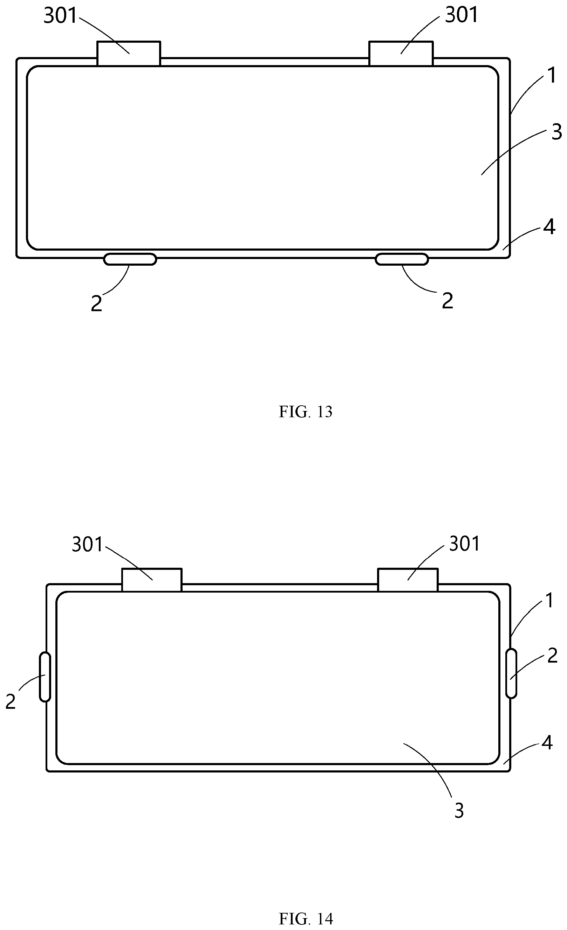

The following describes embodiments of the present disclosure with reference to FIGS. 1 to 14.

According to an embodiment of the present disclosure, as shown in FIGS. 1 to 2, a battery is provided, which includes a housing 1, a pressure relief mechanism 2, and an electrode assembly 3.

Specifically, as shown in FIG. 1, the pressure relief mechanism 2 is disposed on the housing 1, where a theoretical design value of an opening region area of the pressure relief mechanism 2 is S₁, and an actual value of the opening region area of the pressure relief mechanism 2 is Sᵥₐₗᵥₑ. It can be understood that S₁ represents a minimum value of the opening region area of the pressure relief mechanism 2 on the housing 1, and the actual value Sᵥₐₗᵥₑ of the opening region area of the pressure relief mechanism 2 should be greater than or equal to the theoretical design value S₁ of the opening region of the pressure relief mechanism 2.

Specifically, as shown in FIG. 1, the electrode assembly 3 is disposed within the housing 1, and the electrode assembly 3 is arranged at intervals from an inner wall of the housing 1, so that a pressure relief channel 4 is formed between the electrode assembly 3 and the inner wall of the housing 1. A theoretical design value of an equivalent sectional area of the pressure relief channel 4 is S₂, and an actual value of the equivalent sectional area of the pressure relief channel 4 is S_{section}.

It should be noted that the equivalent sectional area of the pressure relief channel 4 is an average value of sectional areas of the pressure relief channel 4 at various locations.

When Sᵥₐₗᵥₑ is determined, the quantity of pressure relief mechanisms 2 is n₁, and then n₁=[S₁/Sᵥₐₗᵥₑ]; that is, when Sᵥₐₗᵥₑ is determined and Sᵥₐₗᵥₑ<S₁, n₁ pressure relief mechanisms 2 required on the housing 1 can be calculated by n₁=[S₁/Sᵥₐₗᵥₑ].

When S_{section} is determined, the quantity of pressure relief mechanisms 2 is n₂, and then n₂=[S₂/S_{section}]; that is, when S_{section} is determined, n₂ pressure relief mechanisms 2 required on the housing 1 can be calculated by n₂=[S₂/S_{section}].

It should be noted that $\left⌈x\right⌉$ represents a rounding-up operation, where the rounding-up operation refers to rounding a numerical value up to the nearest integer. The rule of the rounding-up operation is as follows: if x is an integer, the rounding-up result is x itself; if x is a decimal, the rounding-up result is the smallest integer greater than x. For example, a result of $\left⌈3.2\right⌉$ subjected to rounding-up operation is 4, and a result of $\left⌈3\right⌉$ subjected to the rounding-up operation is 3.

According to this battery, when Sᵥₐₗᵥₑ is determined, for example, when the pressure relief mechanism 2 is a standard component or when a specific pressure relief mechanism 2 is requested by a customer, Sᵥₐₗᵥₑ is a fixed value, and n₁ pressure relief mechanisms 2 required on the housing 1 can be calculated by n₁=[S₁/Sᵥₐₗᵥₑ]. When S_{section} is determined, for example, when the external dimensions of the housing 1 or the dimensions of the electrode assembly 3 cannot be changed in certain projects, or when customer customization imposes requirements on the volume, energy, or density of the battery, S_{section} is a fixed value, and n₂ pressure relief mechanisms 2 required on the housing 1 can be calculated by n₂=[S₂/S_{section}]. The battery associates the quantity of pressure relief mechanisms 2 with the opening region area of the pressure relief mechanisms 2 and the equivalent sectional area of the pressure relief channel 4, and calculates the quantity of pressure relief mechanisms 2 required on the housing 1 under different conditions through the above formulas. This avoids insufficient quantity of pressure relief mechanisms 2 affecting gas discharge or excessive quantity of pressure relief mechanisms 2 increasing cost, thereby standardizing determination of the quantity of pressure relief mechanisms 2, and reasonably providing the pressure relief mechanisms 2 on the housing 1, which ensures that hot gas can be smoothly discharged through the pressure relief mechanisms 2 when the battery undergoes thermal runaway, thereby avoiding the rupture of the housing 1, and thus improving the safety performance of the battery.

Moreover, the standardized arrangement of the pressure relief mechanisms 2 can be directly verified on prismatic cells without requiring new mold development, thereby reducing cost and shortening the development cycle.

The pressure relief mechanisms 2 can be explosion-proof valves. An installation hole is formed on an end face of a side of the housing 1, and the explosion-proof valve is installed in the installation hole. The specific arrangement of the installation hole is not limited herein and can be configured according to actual requirements.

In an embodiment, when both Sᵥₐₗᵥₑ and S_{section} are determined, the quantity of pressure relief mechanisms 2 is n₃, and then n₃=n₁*n₂. When both Sᵥₐₗᵥₑ and S_{section} are determined, n₃ pressure relief mechanisms 2 required on the housing 1 can be calculated by n₃=n₁*n₂ to meet the requirements for quantity of pressure relief mechanisms 2 to be provided on the housing 1 under different conditions, thereby standardizing and rationalizing arrangement of the pressure relief mechanisms 2 on the housing 1. The suitable quantity of pressure relief mechanisms can be ultimately determined based on different battery material systems, capacities, rated voltages, and gas generation characteristics including gas amount and gas generation rate, in combination with design values such as the areas of the pressure relief mechanisms 2 and the equivalent sectional area of the pressure relief channel 4.

In an embodiment, the battery has a capacity C and a rated voltage V, and an area coefficient of the pressure relief mechanism 2 is α, where 0.3≤α≤1, and S₁=CVα. The theoretical design value S₁ of the opening region area of the pressure relief mechanism 2 can be calculated according to S₁=CVα, or a fixed value can be input in advance.

The area coefficient α is related to the material system. The more reactive the material system is and the higher the energy density is, the greater the area coefficient α is.

Initially, α is obtained by fitting small-batch experimental data first, and then verified and generalized for application.

The area coefficient α is directly related to the reactivity of the material system. The greater the gas generation and the faster the gas generation rate, the larger the required area of the pressure relief mechanism 2 is. Reference values of the pressure relief area of the pressure relief mechanism 2 can be obtained through the battery thermal runaway gas generation test. The gas generation per ampere-hour (L/Ah) for different material systems ranges from 0.3 L to 1.8 L. Assuming the same pressure resistance of the housing 1 and a requirement to release all gas within the same duration and at the same exhaust rate, the area of the pressure relief mechanism 2 should be positively correlated with the unit capacity gas generation of the material system, and under ideal conditions, can be linearly correlated. This provides the theoretical premise for the selection of the area coefficient α.

Tables 1 and 2 show the measured gas generation data per ampere-hour (L/Ah) for different material systems. Under this premise, through the calculation based on existing products, there exists a coefficient α, which is approximately equal to a ratio of the product of battery capacity and voltage to the area of the pressure relief mechanism 2. In this case, the area coefficient α has a relatively wide range.

Then, by classifying the material systems and correcting the reference values in Tables 1 and 2, the range can be narrowed to about 0.1 based on measured gas generation data.

Finally, considering the influence of design factors such as filling coefficient and compaction density on gas production, the fluctuation range of α can be further reduced to within 0.1 by the designer.

For example, for a power lithium iron phosphate cell, with a measured gas generation of 1.0 L/Ah, the area coefficient α ranges from 0.4 to 0.7. Based on the corresponding relationship within the interval, the range can be narrowed to 0.6-0.7. Considering a higher energy density design of the cell, the value can be selected as 0.65-0.7.

Special note: For non-pure liquid electrolyte systems, such as solid-state and semi-solid-state (with gel as a type of semi-solid), the cathode material is ternary lithium. For systems with multiple mixed materials, gas generation can be calculated according to the proportion weights of the mixture or measured experimentally, and then the area coefficient α can be selected for reference.

**Table 1**

| Material system | Sodium battery system | Lithium solid-state battery | Lithium gel or semi-solid battery | Energy storage lithium iron phosphate |
|---|---|---|---|---|
| Gas generation (L/Ah) | 0.4-0.6 | 0.3-0.8 | 0.4-1.2 | 0.5-0.8 |
| Reference value of α | 0.3-0.5 | 0.3-0.6 | 0.3-0.7 | 0.3-0.6 |

**Table 2**

| Material system | Power lithium iron phosphate | M3P or lithium iron phosphate salts | Low/medium nickel | High nickel/silicon-doped |
|---|---|---|---|---|
| Gas generation (L/Ah) | 0.6-1.2 | 0.6-1.4 | 1.2-1.6 | 1.5-1.8 |
| Reference value of α | 0.4-0.7 | 0.4-0.8 | 0.6-0.9 | 0.7-1.0 |

In an embodiment, an equivalent area coefficient of the pressure relief channel 4 is γ, where 0.1≤γ≤0.5, and S₂=S₁*γ. A theoretical design value S₂ of an equivalent sectional area of the pressure relief channel 4 can be calculated by S₂=S₁*γ.

The equivalent area coefficient γ of the pressure relief channel 4 is directly related to the gas generation rate. γ is obtained by fitting small-batch experimental data, and then verified and generalized for application. The theoretical basis for selecting γ is as follows: assuming the same gas generation amount and the same explosion-proof valve area, a faster internal gas generation rate requires a larger internal gas space. By collecting test data from different material systems and performing fitting, a relationship curve between S₁ and S₂ can be obtained, from which an equivalent sectional area coefficient γ of the pressure relief channel 4 can be determined. The results are shown in Tables 3 and 4.

**Table 3**

| Material system | Sodium battery system | Lithium solid-state battery | Lithium gel or semi-solid battery | Energy storage lithium iron phosphate |
|---|---|---|---|---|
| Gas generation rate (L/Ah/s) | 0.01-0.04 | 0.05-0.1 | 0.05-0.12 | 0.01-0.06 |
| Reference value of γ | 0.1-0.2 | 0.15-0.5 | 0.2-0.5 | 0.1-0.3 |

**Table 4**

| Material system | Power lithium iron phosphate | M3P or lithium iron phosphate salts | Low/medium nickel | High nickel/silicon-doped |
|---|---|---|---|---|
| Gas generation rate (L/Ah/s) | 0.01-0.06 | 0.02-0.08 | 0.1-0.15 | 0.10-0.18 |
| Reference value of γ | 0.1-0.3 | 0.1-0.35 | 0.25-0.5 | 0.25-0.5 |

In an embodiment, an inner cavity of the housing 1 has a length L, a height H, and a thickness T; and a gas space occupancy rate of the battery is β, where 0.01≤β≤0.18, and S_{section}=LHTβ/(L+H)/2. Based on L, H, and T of the housing 1 and the gas space occupancy rate β of the battery, S_{section} can be calculated by S_{section}=LHTβ/(L+H)/2.

In an embodiment, a thickness of the electrode assembly 3 is approximately equal to a thickness of the inner cavity of the housing 1. The electrode assembly 3 has a length l and a height h, and β=1-hl/(HL). When no input parameter for the gas space occupancy rate β is available, β can be determined according to the formula β=1-hl/(HL).

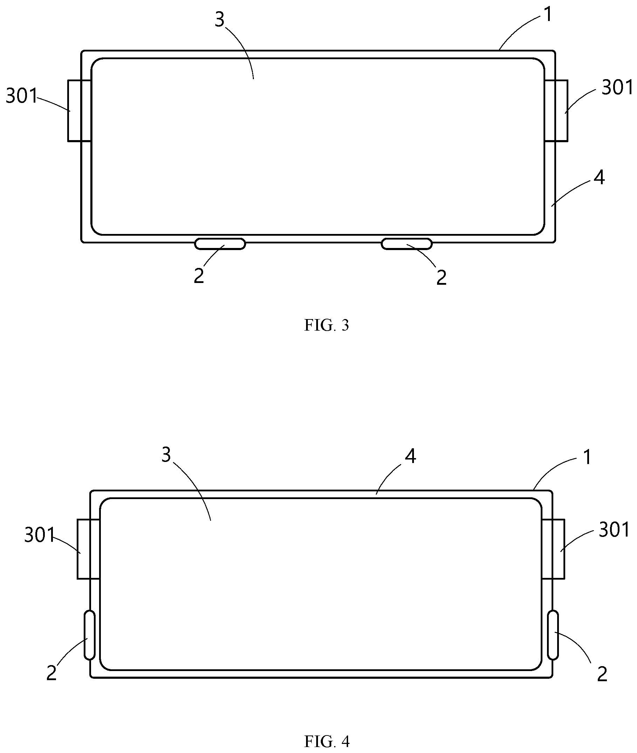

In an embodiment, as shown in FIGS. 3 to 14, a plurality of pressure relief mechanisms 2 are arranged at intervals on side walls of the housing 1. By providing the plurality of pressure relief mechanisms 2 on the side walls of the housing 1 at intervals, when a portion of the pressure relief channel 4 is blocked or gas discharge is obstructed, gas can be discharged through other pressure relief mechanisms 2, which ensures that hot gas can be smoothly discharged through the pressure relief mechanisms 2 during battery thermal runaway.

For example, the pressure relief mechanisms 2 can be arranged on the same side of the housing 1 or on opposite sides of the housing 1.

In an embodiment, as shown in FIGS. 3, 4, 5, 7, and 8, a plurality of pressure relief mechanisms 2 are symmetrically arranged. By arranging the pressure relief mechanisms 2 symmetrically, when a pressure relief channel 4 on one side or a portion of the pressure relief mechanisms 2 is blocked, gas in the pressure relief channel 4 can be discharged through a symmetrically opposite pressure relief channel 4 or pressure relief mechanism 2, which ensures smooth gas discharge.

For example, the pressure relief mechanisms 2 can be arranged with central symmetry or mirror symmetry.

In an embodiment, an extension direction of the electrode assembly 3 is perpendicular to a plane in which the pressure relief mechanisms 2 are disposed. The extension direction can include the long side or the short side. When the battery undergoes thermal runaway, the hot gas can flow along the extension direction of the electrode assembly 3 to the pressure relief mechanisms 2, reducing the tortuosity of the pressure relief path, and allowing rapid and effective discharge of hot gas from the housing 1, thereby reducing the risk of battery explosion.

As shown in FIGS. 3 to 14, openings are provided at two ends of the housing 1. A positive electrode cover plate and a negative electrode cover plate are provided on the two openings, respectively. A positive electrode post is provided on the positive electrode cover plate, and a negative electrode post is provided on the negative electrode cover plate. The openings, the positive electrode cover plate, the negative electrode cover plate, the positive electrode post, and the negative electrode post are not shown in the figures. Electrode tabs 301 are provided at two ends of the electrode assembly 3. The electrode tabs 301 are arranged at the two ends of the electrode assembly 3, and the electrode tabs 301 are the positive electrode tab 301 and the negative electrode tab 301. The positive electrode tab 301 is connected to a positive connection sheet, and the negative electrode tab 301 is connected to a negative connection sheet. The positive connection sheet is connected to the positive electrode post, and the negative connection sheet is connected to the negative electrode post. The positive electrode post and the negative electrode post both extend into the housing 1 to the pressure relief channel 4. The positive electrode post and the positive electrode tab 301 are supported between the electrode assembly 3 and the positive electrode cover plate, and the negative electrode post and the negative electrode tab 301 are supported between the electrode assembly 3 and the negative electrode cover plate.

### Example 1

When Sᵥₐₗᵥₑ was determined, Sᵥₐₗᵥₑ was 200 mm², the material system was medium nickel, C was 117 Ah, V was 3.7 V, and α was 0.8. S1=117*3.7*0.8=346.32mm² was calculated according to S₁=CVα. ${n}_{1} = \left⌈346.32/200\right⌉ = 2$ was further calculated by n₁=[S₁/Sᵥₐₗᵥₑ], and the quantity of explosion-proof valves was 2. A battery thermal runaway test was then conducted to verify the rupture of the housing 1. The calculation results and the rupture of the housing 1 are shown in Tables 5 and 6.

### Example 2

When Sᵥₐₗᵥₑ was determined, Sᵥₐₗᵥₑ was 300 mm², the material system was medium nickel, C was 117 Ah, V was 3.7 V, and α was 0.8. S1=117*3.7*0.8=346.32mm² was calculated according to S₁=CVα. ${n}_{1} = \left⌈346.32/300\right⌉ = 2$ was further calculated by n₁=[S₁/Sᵥₐₗᵥₑ], and the quantity of explosion-proof valves was 2. A battery thermal runaway test was then conducted to verify the rupture of the housing 1. The calculation results and the rupture of the housing 1 are shown in Tables 5 and 6.

### Comparative Example 1

When Sᵥₐₗᵥₑ was determined, Sᵥₐₗᵥₑ was 300 mm², the material system was medium nickel, C was 117 Ah, V was 3.7 V, and α was 0.8. S1=117*3.7*0.8=346.32mm² was calculated according to S₁=CVα. ${n}_{1} = \left⌈346.32/300\right⌉ = 2$ was further calculated by n₁=[S₁/Sᵥₐₗᵥₑ], and theoretically, the quantity of explosion-proof valves should be set to 2. However, a comparison was made between the Example in which one explosion-proof valve was installed on the housing 1 and Example 2 in which two explosion-proof valves were installed on the housing 1. A battery thermal runaway test was then conducted to verify the rupture of the housing 1. The calculation results and the rupture of the housing 1 are shown in Tables 5 and 6.

**Table 5**

| Example | C | V | α | S₁ | Sᵥₐₗᵥₑ |
|---|---|---|---|---|---|
| Example 1 | 117 | 3.7 | 0.8 | 346.32 | 200.0 |
| Example 2 | 117 | 3.7 | 0.8 | 346.32 | 300.0 |
| Comparative Example 1 | 117 | 3.7 | 0.8 | 346.32 | 300.0 |

**Table 6**

| Example | n₁ | Quantity of explosion-proof valves | Design evaluation | Housing rupture |
|---|---|---|---|---|
| Example 1 | 2.0 | 2.0 | Reasonable | 0/3 |
| Example 2 | 2.0 | 2.0 | Reasonable | 0/3 |
| Comparative Example 1 | 2.0 | 1.0 | Unreasonable | 2/3 |

### Example 3

When Sᵥₐₗᵥₑ was determined, Sᵥₐₗᵥₑ was 300 mm², the material system was high nickel, C was 136 Ah, V was 3.65 V, and α was 1. S1=136*3.65*1=496.4mm² was calculated according to S₁=CVα. ${n}_{1} = \left⌈496.4/300\right⌉ = 2$ was further calculated by n₁=[S₁/Sᵥₐₗᵥₑ], and the quantity of explosion-proof valves was 2. A battery thermal runaway test was then conducted to verify the rupture of the housing 1. The calculation results and the rupture of the housing 1 are shown in Tables 7 and 8.

### Comparative Example 2

When Sᵥₐₗᵥₑ was determined, Sᵥₐₗᵥₑ was 300 mm², the material system was high nickel, C was 136 Ah, V was 3.65 V, and α was 1. S1=136*3.65*1=496.4mm² was calculated according to S₁=CVα. ${n}_{1} = \left⌈496.4/300\right⌉ = 2$ was further calculated by n₁=[S₁/Sᵥₐₗᵥₑ], that is, the quantity of explosion-proof valves was 2. A comparison was made between the Example in which one explosion-proof valve was installed on the housing 1 and Example 3 in which two explosion-proof valves were installed on the housing 1. A battery thermal runaway test was then conducted to verify the rupture of the housing 1. The calculation results and the rupture of the housing 1 are shown in Tables 7 and 8.

**Table 7**

| Example | C | V | α | S₁ | Sᵥₐₗᵥₑ |
|---|---|---|---|---|---|
| Example 3 | 136 | 3.65 | 1 | 496.4 | 300.0 |
| Comparative Example 2 | 136 | 3.65 | 1 | 496.4 | 300.0 |

**Table 8**

| Example | n₁ | Quantity of explosion-proof valves | Design evaluation | Housing rupture |
|---|---|---|---|---|
| Example 3 | 2.0 | 2.0 | Reasonable | 0/3 |
| Comparative Example 2 | 2.0 | 1.0 | Unreasonable | 3/3 |

### Example 4

When S_{section} was determined, S_{section} was 119.1 mm², the material system was high-nickel silicon-doped, C was 165 Ah, V was 3.72 V, α was 0.9, and γ was 0.45. S₂=CVαγ=165*3.72*0.9*0.45=248.589 was calculated by S₂=S₁*γ and S₁=CVα. ${n}_{2} = \left⌈248.589/119.1\right⌉ = 3$ was calculated by n₂=[S₂/S_{section}], that is, the quantity of explosion-proof valves was 3. A battery thermal runaway test was then conducted to verify the rupture of the housing 1. The calculation results and the rupture of the housing 1 are shown in Tables 9 and 10.

### Example 5

When S_{section} was determined, S_{section} was 147.2 mm², the material system was high-nickel silicon-doped, C was 165 Ah, V was 3.72 V, α was 0.9, and γ was 0.45. S₂=CVαγ=165*3.72*0.9*0.45=248.589 was calculated by S₂=S₁*γ and S₁=CVα. ${n}_{2} = \left⌈248.589/147.2\right⌉ = 2$ was calculated by n₂=[S₂/S_{section}], that is, the quantity of explosion-proof valves was 2. A battery thermal runaway test was then conducted to verify the rupture of the housing 1. The calculation results and the rupture of the housing 1 are shown in Tables 9 and 10.

### Comparative Example 3

When both Sᵥₐₗᵥₑ and S_{section} were determined, Sᵥₐₗᵥₑ was 300 mm², S_{section} was 132 mm², the material system was high-nickel silicon-doped, C was 165 Ah, V was 3.72 V, α was 0.9, and γ was 0.45. S₁=CVα=165*3.72*0.9=552.42 and S₂=CVαγ=165*3.72*0.9*0.45=248.589 were calculated by S₂=S₁*γ and S₁=CVα. n₁=[S₁/Sᵥₐₗᵥₑ]=[552.42/300]=2, n₂=[S₂/S_{section}]=[248.589/132]=2, and then N₃=n₁*n₂=2*2=4. That is, the quantity of explosion-proof valves was 4. A comparison was made between the Example in which three explosion-proof valves were installed on the housing 1 and an Example in which four explosion-proof valves should actually be installed on the housing 1. A battery thermal runaway test was then conducted to verify the rupture of the housing 1. The calculation results and the rupture of the housing 1 are shown in Tables 9 and 10.

**Table 9**

| Example | C | V | α | β | γ | H | L | T | h | l |
|---|---|---|---|---|---|---|---|---|---|---|
| Example 4 | 165 | 3.72 | 0.9 | 8% | 0.45 | 105 | 219 | 43 | 100 | 212 |
| Example 5 | 165 | 3.72 | 0.9 | 10% | 0.45 | 105 | 219 | 43 | 98 | 212 |
| Comparative Example 3 | 165 | 3.72 | 0.9 | 9% | 0.45 | 103 | 219 | 43 | 98 | 210 |

**Table 10**

| Example | S₁ | S₂ | Sᵥₐₗᵥₑ | S_{section} | n₁ | n₂ | Quantity of explosion-proof valves | Design evaluation | Housing rupture |
|---|---|---|---|---|---|---|---|---|---|
| Example 4 | 552.42 | 248.6 | 600.0 | 119.1 | 1.0 | 3.0 | 3.0 | Reasonable | 0/3 |
| Example 5 | 552.42 | 248.6 | 600.0 | 147.2 | 1.0 | 2.0 | 2.0 | Reasonable | 0/3 |
| Comparative Example 3 | 552.42 | 248.6 | 300.0 | 132.0 | 2.0 | 2.0 | 3.0 | Unreasonable | 2/3 |

### Example 6

When S_{section} was determined, S_{section} was 23.5 mm², the material system was a lithium iron phosphate system, C was 106 Ah, V was 3.19 V, α was 0.65, and γ was 0.2. S₂=CVαγ=106*3.19*0.65*0.2=43.9582 was calculated by S₂=S₁*γ and S₁=CVα. ${n}_{2} = \left⌈43.9582/23.5\right⌉ = 2$ was calculated by n₂=[S₂/S_{section}], that is, the quantity of explosion-proof valves was 2. A battery thermal runaway test was then conducted to verify the rupture of the housing 1. The calculation results and the rupture of the housing 1 are shown in Tables 11 and 12.

### Example 7

When both Sᵥₐₗᵥₑ and S_{section} were determined, Sᵥₐₗᵥₑ was 250 mm², S_{section} was 20.9 mm², the material system was a lithium iron phosphate system, C was 106 Ah, V was 3.19 V, α was 0.65, and γ was 0.2. S₁=CVα=106*3.19*0.65=219.791 and S₂=CVαγ=106*3.19*0.65*0.2=43.9582 were calculated by S₂=S₁*γ and S₁=CVα. n₁=[S₁/Sᵥₐₗᵥₑ]=[219.791/250]=1, n₂=[S₂/S_{section}]=[43.9582/20.9]=3, and then n₃=n₁*n₂=1*3=3. That is, the quantity of explosion-proof valves was 3. A comparison was made between the Example in which one explosion-proof valve was installed on the housing 1 and an Example in which three explosion-proof valves should actually be installed on the housing 1. A battery thermal runaway test was then conducted to verify the rupture of the housing 1. The calculation results and the rupture of the housing 1 are shown in Tables 11 and 12.

### Example 8

When both Sᵥₐₗᵥₑ and S_{section} were determined, Sᵥₐₗᵥₑ was 250 mm², S_{section} was 24.9 mm², the material system was a lithium iron phosphate system, C was 106 Ah, V was 3.19 V, α was 0.65, and γ was 0.2. S₁=CVα=106*3.19*0.65=219.791 and S₂=CVαγ=106*3.19*0.65*0.2=43.9582 were calculated by S₂=S₁*γ and S₁=CVα. n₁=[S₁/Sᵥₐₗᵥₑ]=[219.791/250]=1, n₂=[S₂/S_{section}]=[43.9582/34.9]=2, and then n₃=n₁*n₂=1*2=2. That is, the quantity of explosion-proof valves was 2. A battery thermal runaway test was then conducted to verify the rupture of the housing 1. The calculation results and the rupture of the housing 1 are shown in Tables 11 and 12.

### Example 9

When both Sᵥₐₗᵥₑ and S_{section} were determined, Sᵥₐₗᵥₑ was 250 mm², S_{section} was 68.1 mm², the material system was a lithium iron phosphate system, C was 198 Ah, V was 3.2 V, α was 0.7, and γ was 0.2. S₁=CVα=198*3.2*0.7=443.52 and S₂=CVαγ=198*3.2*0.7*0.2=88.704 were calculated by S₂=S₁*γ and S₁=CVα. n₁=[S₁/Sᵥₐₗᵥₑ]=[443.52/250]=2, n₂=[S₂/S_{section}]=[88.704/68.1]=2, and then n₃=n₁*n₂=2*2=4. That is, the quantity of explosion-proof valves was 4. A battery thermal runaway test was then conducted to verify the rupture of the housing 1. The calculation results and the rupture of the housing 1 are shown in Tables 11 and 12.

### Example 10

When both Sᵥₐₗᵥₑ and S_{section} were determined, Sᵥₐₗᵥₑ was 250 mm², S_{section} was 41.9 mm², the material system was a lithium iron phosphate system, C was 198 Ah, V was 3.2 V, α was 0.7, and γ was 0.2. S₁=CVα=198*3.2*0.7=443.52 and S₂=CVαγ=198*3.2*0.7*0.2=88.704 were calculated by S₂=S₁*γ and S₁=CVα. n₁=[S₁/Sᵥₐₗᵥₑ]=[443.52/250]=2, n₂=[S₂/S_{section}]=[88.704/41.9]=3, and then n₃=n₁*n₂=2*3=6. That is, the quantity of explosion-proof valves was 6. A battery thermal runaway test was then conducted to verify the rupture of the housing 1. The calculation results and the rupture of the housing 1 are shown in Tables 11 and 12.

### Example 11

When both Sᵥₐₗᵥₑ and S_{section} were determined, Sᵥₐₗᵥₑ was 250 mm², S_{section} was 34.9 mm², the material system was a lithium iron phosphate system, C was 198 Ah, V was 3.2 V, α was 0.7, and γ was 0.2. S₁=CVα=198*3.2*0.7=443.52 and S₂=CVαγ=198*3.2*0.7*0.2=88.704 were calculated by S₂=S₁*γ and S₁=CVα. n₁=[S₁/Sᵥₐₗᵥₑ]=[443.52/250]=2, n₂=[S₂/S_{section}]=[88.704/34.9]=3, and then n₃=n₁*n₂=2*3=6. That is, the quantity of explosion-proof valves was 6. A comparison was made between the Example in which four explosion-proof valves were installed on the housing 1 and an Example in which six explosion-proof valves should actually be installed on the housing 1. A battery thermal runaway test was then conducted to verify the rupture of the housing 1. The calculation results and the rupture of the housing 1 are shown in Tables 11 and 12

**Table 11**

| Example | C | V | α | β | γ | H | L | T | h | l |
|---|---|---|---|---|---|---|---|---|---|---|
| Example 6 | 106 | 3.19 | 0.65 | 4% | 0.20 | 91 | 578 | 15 | 91.0 | 555 |
| Example 7 | 106 | 3.19 | 0.65 | 3.6% | 0.20 | 91 | 578 | 15 | 89 | 570 |
| Example 8 | 106 | 3.19 | 0.65 | 4.2% | 0.20 | 91 | 578 | 15 | 89 | 566 |
| Example 9 | 198 | 3.2 | 0.7 | 6.7% | 0.20 | 117 | 575 | 21 | 115 | 546 |
| Example 10 | 198 | 3.2 | 0.7 | 4.1% | 0.20 | 117 | 575 | 21 | 115 | 561 |
| Example 11 | 198 | 3.2 | 0.7 | 3.4% | 0.20 | 117 | 575 | 21 | 115 | 565 |

**Table 12**

| Example | S₁ | S₂ | Sᵥₐₗᵥₑ | S_{section} | n₁ | n₂ | Quantity of explosion-proof valves | Design evaluation | Housing rupture |
|---|---|---|---|---|---|---|---|---|---|
| Example 6 | 219.791 | 44.0 | 250.0 | 23.5 | 1.0 | 2.0 | 2.0 | Reasonable | 0/3 |
| Example 7 | 219.791 | 44.0 | 250.0 | 20.9 | 1.0 | 3.0 | 1.0 | Unreasonable | 3/3 |
| Example 8 | 219.791 | 44.0 | 250.0 | 24.9 | 1.0 | 2.0 | 2.0 | Reasonable | 0/3 |
| Example 9 | 443.52 | 88.7 | 250.0 | 68.1 | 2.0 | 2.0 | 4.0 | Reasonable | 0/3 |
| Example 10 | 443.52 | 88.7 | 250.0 | 41.9 | 2.0 | 3.0 | 6.0 | Reasonable | 0/3 |
| Example 11 | 443.52 | 88.7 | 250.0 | 34.9 | 2.0 | 3.0 | 4.0 | Unreasonable | 1/3 |

According to an embodiment of the present disclosure, in another aspect, a battery pack is further provided, which includes the battery described above.

According to the battery, the battery in the battery pack associates the quantity of pressure relief mechanisms 2 with the opening region area of the pressure relief mechanisms 2 and the equivalent sectional area of the pressure relief channel 4, and calculates the quantity of pressure relief mechanisms 2 required on the housing 1 under different conditions. This avoids insufficient quantity of pressure relief mechanisms 2 affecting gas discharge or excessive quantity of pressure relief mechanisms 2 increasing cost, thereby standardizing determination of the quantity of pressure relief mechanisms 2, and reasonably providing the pressure relief mechanisms 2 on the housing 1, which ensures that hot gas can be smoothly discharged through the pressure relief mechanisms 2 when the battery undergoes thermal runaway, thereby avoiding the rupture of the housing 1, and thus improving the safety performance of the battery.

Although embodiments of the present disclosure have been described in conjunction with the drawings, those skilled in the art can make various modifications and variations without departing from the spirit and scope of the present disclosure, and such modifications and variations fall within the scope defined by the appended claims.

## Claims

1. A battery, comprising:
a housing;
a pressure relief mechanism disposed on the housing, wherein a theoretical design value of an opening region area of the pressure relief mechanism is S₁, and an actual value of the opening region area of the pressure relief mechanism is Sᵥₐₗᵥₑ; and/or,
an electrode assembly disposed within the housing, wherein the electrode assembly is arranged at intervals from an inner wall of the housing to form a pressure relief channel, a theoretical design value of an equivalent sectional area of the pressure relief channel is S₂, and an actual value of the equivalent sectional area of the pressure relief channel is S_{section}, wherein
when Sᵥₐₗᵥₑ is determined, a quantity of pressure relief mechanisms is n₁, n₁=[S₁/Sᵥₐₗᵥₑ], and $\left⌈x\right⌉$ is a rounding-up operation; and/or
when S_{section} is determined, a quantity of pressure relief mechanisms is n₂, and n₂=[S₂/S_{section}].

2. The battery as claimed in claim 1, wherein when both Sᵥₐₗᵥₑ and S_{section} are determined, the quantity of pressure relief mechanisms is n₃, and then n₃=n₁*n₂.

3. The battery as claimed in claim 1 or 2, wherein the battery has a capacity C and a rated voltage V, and an area coefficient of the pressure relief mechanism is α, 0.3≤α≤1, and S₁=CVα.

4. The battery as claimed in claim 3, wherein an equivalent area coefficient of the pressure relief channel is γ, 0.1≤γ≤0.5, and S₂=S₁*γ.

5. The battery as claimed in claim 1 or 2, wherein an inner cavity of the housing has a length L, a height H, and a thickness T; and
a gas space occupancy rate of the battery is β, 0.01≤β≤0.18, and S_{section}=LHTβ/(L+H)/2.

6. The battery as claimed in claim 5, wherein the electrode assembly has a length l and a height h, and β=1-hl/(HL).

7. The battery as claimed in claim 1 or 2, wherein a plurality of pressure relief mechanisms are arranged at intervals on a side wall of the housing.

8. The battery as claimed in claim 7, wherein the plurality of pressure relief mechanisms are symmetrically arranged.

9. The battery as claimed in claim 1 or 2, wherein an extension direction of the electrode assembly is perpendicular to a plane where the pressure relief mechanism is located.

10. A battery pack, comprising the battery as claimed in any one of claims 1 to 9.
